# EUROPÄISCHE PATENTSCHRIFT

(11) **EP 1 052 159 B1**
(45) Veröffentlichungstag und Bekanntmachung des Hinweises auf die Patenterteilung: **01.10.2003**
(21) Anmeldenummer: 00104895.8
(22) Anmeldetag: 08.03.2000
(51) Int. Cl.: B62D 5/06

(54) **Druckabschalteinrichtung für eine Hilfskraftlenkung in den Endstellungen des Lenkausschlages**
Pressure disconnection device for power steering at its extreme steering deflection positions.
Coupe-circuit pour fluide sous pression pour direction assistée dans les positions extrêmes d'angle de braquage

(30) Priorität: 11.05.1999 DE 19921553
(43) Veröffentlichungstag der Anmeldung: 15.11.2000
(73) Patentinhaber: Mercedes Benz Lenkungen GmbH, 40476 Düsseldorf (DE)
(72) Erfinder: Lemke, Norbert, Dipl.-Ing., 71634 Ludwigsburg (DE); Gützlaff, Markus, Dipl.-Ing., 71686 Hochberg (DE)
(74) Vertreter: Lenzing, Andreas, Dr.

(56) Entgegenhaltungen:
- DE-A- 3 902 808
- US-A- 4 177 714
- US-A- 5 322 142

## Beschreibung

Die Erfindung betrifft eine Druckabschalteinrichtung für eine Hilfskraftlenkung in den Endstellungen des Lenkausschlages mit den Merkmalen des Oberbegriffs des Anspruchs 1. Derartige Druckabschalteinrichtungen sind aus dem Stand der Technik bekannt. So zeigt beispielsweise die EP 0321756 A2 eine Kugelumlauflenkung, bei der der Arbeitskolben zwei in Axialrichtung betätigbare Sitzventile trägt, die in den Endstellungen des zulässigen Lenkausschlages an das Gehäuse anschlagen und dabei den im jeweils mit Druck beaufschlagten Arbeitsraum anstehenden Arbeitsdruck abbauen. Hierdurch entfällt bei diesem Anschlag die Hilfskraftunterstützung, so daß ein weiteres Einschlagen der Lenkung nicht möglich ist.

Weiter ist aus der spanischen Patentanmeldung P9202046 eine gattungsgemäße Hilfskraftlenkung bekannt, bei der ebenfalls Abschaltventile dem Arbeitskolben zugeordnet sind. Die Abschaltventile stoßen in den Extremstellungen an einen Anschlag in Gestalt eines in Richtung auf die Ventile zu federvorgespannten Stifts. Der Stift kann in Radialrichtung mit einer Klemmschraube gesichert werden. Zur Einstellung des Öffnungspunktes der Abschaltventile und damit zur Einstellung der Anschlagsbegrenzungen ist es bei dieser Lenkung erforderlich, die Klemmschraube zu lösen und die Lenkung bei entlasteten Rädern manuell bis zum maximal zulässigen Einschlagswinkel zu betätigen. Hierdurch wird das Abschaltventil den federbelasteten Stift bis in die erforderliche Position hineindrücken. Sodann kann in dieser Position der Stift gesichert werden und ist damit dauerhaft eingestellt.

Schließlich ist der nächstkommende Stand der Technik aus der gattungsbildenden DE 4127610 bekannt, bei der Anschlagmittel in Gestalt eines Bolzens oder einer Buchse die Endanschläge der Abschaltventile bilden. Die Kolben bzw. die Buchsen sitzen mit einem Preßsitz auf in Umfangsrichtung ausgebildeten Rippen und können bei entlasteten Vorderrädern zum Einstellen der Lenkung manuell, d. h. ohne Hilfskraftunterstützung, bis in die erforderliche Position gedrückt werden, wo sie aufgrund des Preßsitzes selbsttätig fixiert sind. Die DE 39 02 808 A zeigt eine ähnliche Druckabschalteinrichtung. Bei dieser Ausführungsform ist das manuelle Fixieren, wie es aus der spanischen Patentanmeldung P9202046 bekannt ist, nicht erforderlich. Der Preßsitz des Kolbens bzw. der Buchse erfordert jedoch zum einen eine sehr präzise Fertigung der entsprechenden Bauelemente und erlaubt zum anderen allenfalls sehr wenige wiederholte Einstellungen, da sich der Sitz bei wiederholter Veränderung lockert und die Haltekraft unter die Öffnungskraft des Abschaltventils sinkt.

Es ist deshalb Aufgabe der vorliegenden Erfindung, eine mehrfach einstellbare und durch einfaches manuelles Einschlagen der Lenkung selbst einstellende Druckabschaltvorrichtung für eine Hilfskraftlenkung zu schaffen.

Diese Aufgabe wird von einer Druckabschalteinrichtung mit den Merkmalen des Anspruchs 1 gelöst.

Weil die Anschlagmittel mittels einer in Radialrichtung wirkenden Feder mit einer die Öffnungskraft der Abschaltventile übersteigenden Haltekraft fixiert sind, können diese durch manuelles Verfahren der Abschaltventile gegen die Anschlagmittel auf die erforderliche Einstellung gebracht werden. Auch ein mehrfaches Verschieben der Anschlagmittel führt nicht zu einem wesentlichen Abfall der Haltekraft der Radialfeder. Hierbei ist von Vorteil, wenn das Anschlagmittel einem im wesentlichen runden Schaftbereich aufweist und die Feder den Schaftbereich ringförmig umgibt. Dies bewirkt neben einer guten Haltekraft auch eine über den Umfang gleichmäßige Verteilung dieser Haltekraft sowie eine gewisse Führung des Anschlagmittels. Wenn die Feder eine umlaufende Bandfeder mit in Umfangsrichtung wellenartigem Profil ist, kann eine besonders hohe Haltekraft bei gleichzeitiger Zentrierung des Anschlagmittels erzielt werden.

Für eine einfache Rückstellung der Anschlagmittel ist von Vorteil, wenn die Anschlagmittel jeweils in einer Bohrung, beispielsweise einer Durchgangsbohrung des Lenkgehäuses oder einer Bohrung eines separaten Halters geführt sind, wobei vorzugsweise jede Durchgangsbohrung einen entfernbaren fluid- und druckdichten Verschluß aufweist, nach dessen Entfernen ein dem Lenkgehäuse abgewandtes Ende des jeweiligen Anschlagmittels von außen zugänglich ist. Das Anschlagmittel kann dann manuell in eine Grundstellung bewegt werden, von der aus die Einstellung erfolgt.

Schließlich ist für eine zuverlässige und mechanisch stabile Lagerung vorteilhaft, wenn die Feder in einer der Durchgangsbohrung oder dem Schaftbereich zugeordneten Ringnut einliegt und in Axialrichtung fixiert ist. Dann ist entweder die Feder im Lenkgehäuse oder auf dem Anschlagmittel fixiert und kann bei der Montage einfach in diese definierte Position gebracht werden.

Im folgenden wird ein Ausführungsbeispiel der vorliegenden Erfindung anhand der Zeichnung beschrieben.

Es zeigen:
- Figur 1:: Einen Querschnitt durch eine erfindungsgemäße Kugelumlauflenkung im Bereich eines Abschaltventils mit dem Anschlagmittel in Grundstellung;
- Figur 2:: den Querschnitt gemäß Figur 1 mit eingestelltem Anschlagmittel;
- Figur 3:: einen Querschnitt durch die Lenkung gem. Fig. 1 im Bereich des zweiten Anschlagmittels; sowie
- Figur 4:: eine Radialfeder in einer perspektivischen Ansicht.

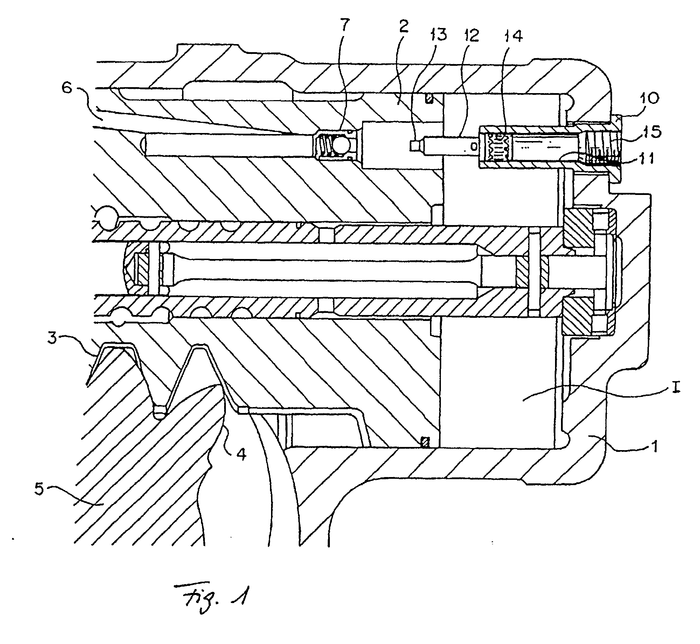

Die Figur 1 zeigt einen Ausschnitt aus einer Kugelumlauflenkung in einem Querschnitt. Hierbei ist ein Lenkgehäuse 1 dargestellt, das einen Arbeitskolben 2 enthält und in Axialrichtung führt sowie mit diesem einen ersten Arbeitsraum I begrenzt. Der Arbeitskolben 2 trägt eine Verzahnung 3, die mit einem entsprechenden Ritzel 4 einer Lenkwelle 5 kämmt. Der Arbeitskolben 2 trägt weiter einen Kanal 6 mit Abschaltventilen 7. In der Wandung des Lenkgehäuses 1 ist weiter in Axialrichtung mit dem Abschaltventil 7 fluchtend eine Hohlschraube 10 mit einer inneren Durchgangsbohrung 11 angeordnet. In der Durchgangsbohrung 11 ist in Axialrichtung ein Anschlagbolzen 12 geführt, der dem Abschaltventil 7 zugewandt eine Spitze 13 sowie der Hohlschraube 10 zugewandt eine Radialfeder 14 trägt. Die Bohrung 11 der Hohlschraube 10 ist an der Außenseite des Gehäuses mit einem Schraubstopfen 15 flüssigkeits- und druckdicht verschlossen. Der Anschlagbolzen 12 befindet sich in der Darstellung gemäß Figur 1 in seiner linken Extremstellung. Ein Druckausgleich zwischen dem Arbeitsraum I und der Bohrung 11 im Innern der Hohlschraube 10 ist durch eine nicht näher dargestellte Entlastungbohrung oder -nut gewährleistet.

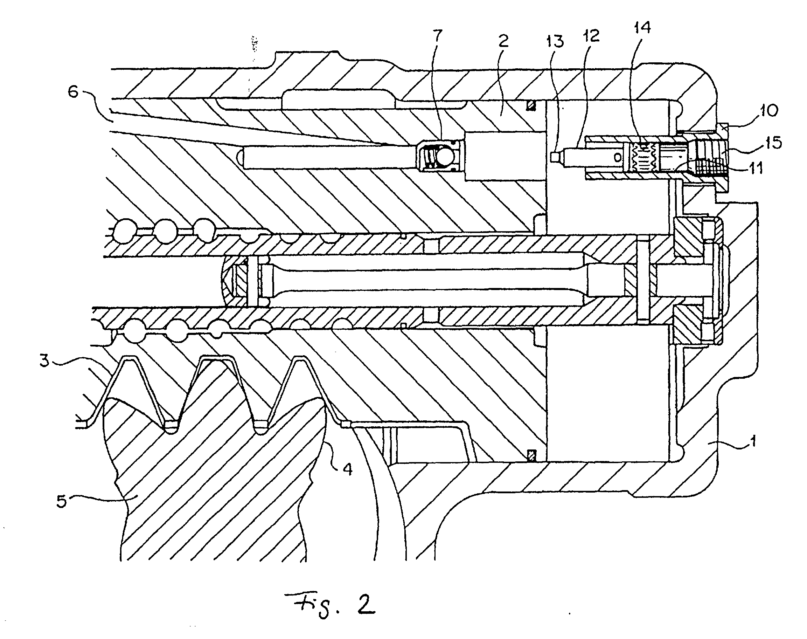

In der Figur 2 ist die Lenkung gemäß Figur 1 dargestellt, wobei gleiche Merkmale gleiche Bezugsziffern tragen. Im Bereich der Hohlschraube 10 ist veranschaulicht, daß der axial verschiebliche Anschlagbolzen 12 hier zur Einstellung eines Endanschlages in eine mittlere Position innerhalb der Bohrung 11 der Hohlschraube 10 verschoben ist.

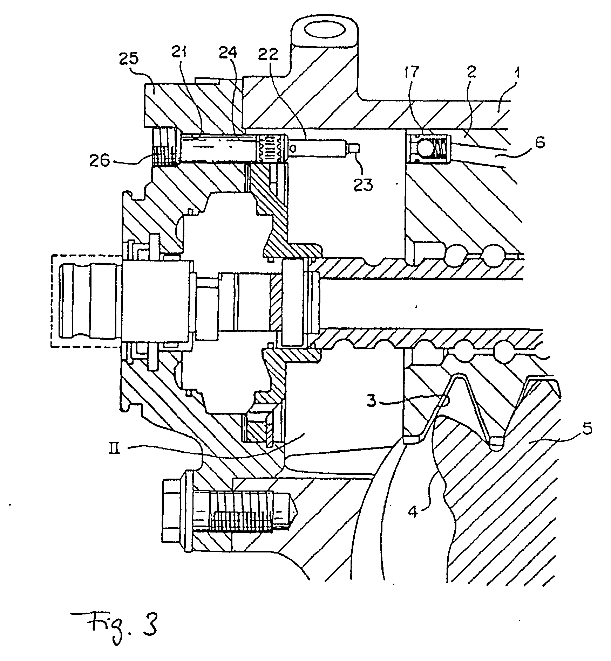

In der Figur 3 ist der der Lenksäule zugewandte Bereich der Lenkung gemäß Figur 1 und Figur 2 dargestellt.

Gleiche Merkmale tragen wieder gleiche Bezugsziffern. Hier begrenzen das Gehäuse 1 und der Arbeitskolben 2 einen zweiten Arbeitsraum II. Das diesseitige Ende des Kanals 6 trägt hierbei ein zweites Abschaltventil 17, das axial fluchtend mit einer zweiten Durchgangsbohrung 21 sowie einem darin gelagerten Anschlagbolzen 22 angeordnet ist. Der Anschlagbolzen 22 trägt eine dem Ventil 17 zugewandte Spitze 23 und ist mittels einer Radialfeder 24 in der Durchgangsbohrung 21 gelagert. Die Durchgangsbohrung 21 ist hier unmittelbar in ein Ventilgehäuse 25 eingebracht und von einem Schraubverschluß 26 fluid- und druckdicht verschlossen. Der Verschluß 26 kann dabei baugleich mit dem Verschluß 15 der Hohlschraube 10 ausgeführt sein.

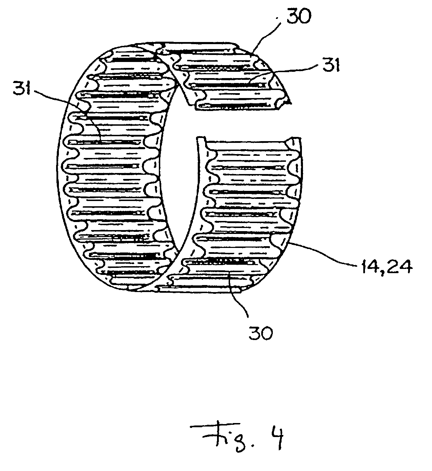

Die Figur 4 zeigt schließlich eine Radialfeder 14, 24 in einer perspektivischen Darstellung. Es ist ersichtlich, daß die Radialfeder eine ringförmige, einseitig offene Bandfeder mit umlaufender, wellenförmiger Struktur 30 ist. Die wellenförmige Struktur ist in diesem Ausführungsbeispiel trapezförmig ausgeprägt, wobei ein Randbereich 31 der Radialfeder 14, 24 von dem Profil frei ist.

In der Praxis arbeitet die insoweit beschriebene Lenkung wie folgt:

Um eine Drehung der Lenkwelle 5 im Uhrzeigersinn zu bewirken, wird der Arbeitsraum II mit Druck beaufschlagt. Der Arbeitskolben 2 wird dabei in der Darstellung der Figuren 1 bis 3 nach rechts gedrängt. Der im Arbeitsraum II anstehende Fluiddruck öffnet das federbelastete Einwegeventil 17, so daß im wesentlichen im Kanal 6 derselbe Druck ansteht wie im Arbeitsraum II. Das Einwegeventil 7 wird in seiner Schließrichtung von diesem Druck beaufschlagt, so daß am Ventil 7 kein Druckabfall eintritt und der im Arbeitsraum II anstehende Fluiddruck aufrechterhalten bleibt. Sobald der Arbeitskolben 2 so weit nach rechts verfahren ist, daß das Ventil 7 mit der Spitze 13 des Anschlagbolzens 12 in Kontakt kommt, wird das Ventil 7 geöffnet. Dann kann sich der im Arbeitsraum II anstehende Druck mit demjenigen im Arbeitsraum I ausgleichen, so daß die Hilfskraftunterstützung aufgrund der in beiden Arbeitsräumen II, I ausgeglichenen Druckverhältnisse wegfällt. Die manuelle aufgebrachte Betätigungskraft ist dann kleiner als die für eine weitere Axialbewegung des Arbeitskolbens erforderliche Mindestkraft. Somit ist die Lenkung in diesem Drehsinn blockiert. Entsprechendes gilt für eine Drehung der Lenkwelle 5 gegen den Uhrzeigersinn, wobei der Arbeitsraum I mit Druck beaufschlagt wird, der Arbeitskolben 2 sich nach links bewegt und der Fluiddruck durch das in diese Richtung öffnende Ventil 7 und den Kanal 6 bis zu dem Ventil 17 gelangt. In der linken Extremstellung, in der die Spitze 23 des Anschlagbolzens 22 auf das Ventil 17 trifft, wird dieses Ventil 17 wiederum geöffnet, so daß sich der Fluiddruck in den Arbeitsräumen I und II bis auf eine geringe Restdruckdifferenz ausgleichen kann. Die Servounterstützung fällt ebenfalls im wesentlichen weg. Die Stellung der Anschlagbolzen 12, 22 und insbesondere der Spitzen 13, 23 in den Bohrungen 11, 21 ist also für den maximal verfügbaren Arbeitsweg des Arbeitskolbens 2 und damit für den maximalen Schwenkwinkel der Lenkwelle 5 ausschlaggebend.

Da hierbei lediglich die Servounterstützung durch weitgehenden Druckausgleich in den Arbeitsräumen I und II entfällt, kann der Arbeitskolben 2 bei Entlastung der gelenkten Achse des Kraftfahrzeugs manuell weiter in Axialrichtung auf den Anschlag zu bewegt werden. Ein geringer Restdruck von 20 bis 40 bar unterstützt diese Bewegung, ist jedoch bei belasteter Achse unwesentlich. Auf diese Weise kommt der Anschlagbolzen 12, 22 in mechanischen Kontakt mit dem Grundkörper des Ventils 7, 17 und schiebt den Anschlagbolzen 12, 22 in die Bohrung 11, 21 hinein. Hierbei wird die Haltekraft innerhalb der Bohrung 11, 21 überwunden, die durch die radiale Vorspannung der Radialfeder 15, 24 aufgebracht wird. Dieser Vorgang dient zur Voreinstellung des Punktes, an dem die Servounterstützung im Betrieb durch Öffnen der Ventile 7, 17 tatsächlich wegfallen soll, also zur Einstellung der im Betrieb wirksamen Endanschläge der Lenkung. Diese Endanschläge können in vielen Fällen erst im Kraftfahrzeug selbst eingestellt werden, da die Einbauverhältnisse und gegebenenfalls die Bereifung eine individuelle Einstellung erforderlich machen.

Soll die Einstellung beispielsweise bei einer Änderung der Bereifung der gelenkten Achse oder geänderten Karosserieauf- oder -anbauten neu vorgenommen werden, so sind bei dem insoweit beschriebenen Ausführungsbeispiel lediglich die Gewindeverschlüsse 15, 26 herauszuschrauben, so daß der Anschlagbolzen 12, 22 von außen mit einer Lehre oder einem Werkzeug wieder in seine innere Grundstellung (veranschaulicht in den Figuren 1 und 3) getrieben werden kann. Sodann ist ein erneuter Einstellvorgang möglich, in dem die gelenkte Achse entlastet wird und die Lenkung ohne Servounterstützung bis zu den neu festzulegenden zulässigen Anschlägen eingeschlagen werden kann. Hierbei werden erneut die Anschlagbolzen 12, 24 in die Bohrungen 11, 21 hineingedrückt, wo sie wiederum durch die Haltekraft der Radialfedern 14, 24 gesichert werden. Dieser Vorgang ist bei dem Gegenstand der vorliegenden Erfindung wiederholt möglich, ohne daß die Haltekraft der Radialfedern 14, 24 wesentlich nachläßt. Für die eigentliche Einstellung der Endanschläge ist außer dem Entlasten der gelenkten Fahrzeugachse keine weitere Manipulation an der Lenkung erforderlich. Bei den aus dem Stand der Technik bekannten Lösungen mußte hierbei entweder der gefundene Anschlag durch Verklemmen des Anschlagbolzens fixiert werden, oder es wurde eine Preßpassung für den Anschlagbolzen gewählt, die zuverlässig nur einmal oder allenfalls wenige Male verstellt werden konnte. Bei häufiger Verstellung läßt die Haltekraft der Preßpassung in einem nicht erwünschten Maß nach.

Als Radialfeder eignen sich besonders die in Figur 4 veranschaulichten sogenannten Toleranzringe oder Radialwellenringe, die kommerziell verfügbar sind und üblicherweise zur Herstellung einer Welle-Nabe-Verbindung dienen. Solche Toleranzringe sind beispielsweise von der Firma Rencol Tolerance Rings Ltd., Großbritannien, zu beziehen.

## Patentansprüche

1. Druckabschalteinrichtung für eine Hilfskraftlenkung in den Endstellungen des Lenkausschlages, wobei die Hilfskraftlenkung wenigstens einen in einem Lenkgehäuse (1) in Axialrichtung verschieblichen, zwei Arbeitsräume (I,II) begrenzenden Arbeitskolben (2) aufweist, mit dem Arbeitskolben (2) zugeordneten Abschaltventilen (7,17) sowie mit dem Lenkgehäuse (1) zugeordneten und in der Axialrichtung verschieblichen Anschlagmitteln (13,23), gegen die jeweils eines der Abschaltventile (7,17) in der Endstellung läuft und dabei zur Abschaltung des Drucks öffnet, **dadurch gekennzeichnet, daß** die Anschlagmittel (13,23) mittels einer in Radialrichtung wirkenden Feder (14,24) kraftschlüssig mit einer die Öffnungskraft der Abschaltventile (7,17) übersteigenden Haltekraft fixiert sind.

2. Vorrichtung nach Anspruch 1, **dadurch gekennzeichnet, daß** das Anschlagmittel (13,23) einen im wesentlichen runden Schaftbereich aufweist und daß die Feder (14,24) den Schaftbereich ringförmig umgibt.

3. Vorrichtung nach Anspruch 1 oder 2, **dadurch gekennzeichnet, daß** die Feder (14,24) eine umlaufende Bandfeder mit in Umfangsrichtung wellenförmigem Profil (30) ist.

4. Vorrichtung nach einem der vorhergehenden Ansprüche, **dadurch gekennzeichnet, daß** die Anschlagmittel (13,23) jeweils in einer Bohrung (11,21) geführt sind, wobei vorzugsweise jede Bohrung (11,21) einen entfernbaren fluid- und druckdichten Verschluß (15,26) aufweist, nach dessen Entfernen ein dem Arbeitskolben (2) des Lenkgehäuses (1) abgewandtes Ende des jeweiligen Anschlagmittels (13,23) zugänglich ist.

5. Vorrichtung nach einem der vorhergehenden Ansprüche, **dadurch gekennzeichnet, daß** die Bohrung (21) eine Durchgangsbohrung des Lenkgehäuses (1) ist.

6. Vorrichtung nach einem der vorhergehenden Ansprüche, **dadurch gekennzeichnet, daß** die Bohrung (11) eine Sackbohrung oder eine Durchgangsbohrung in einem separat in dem Lenkgehäuse (1) zu befestigenden Halteelement (10) ist, vorzugsweise in einer Hohlschraube.

7. Vorrichtung nach einem der vorhergehenden Ansprüche, **dadurch gekennzeichnet, daß** die Feder (14,24) in einer der Bohrung (11,21) oder dem Schaftbereich zugeordneten Ringnut einliegt und in Axialrichtung fixiert ist.

## Claims

1. Pressure disconnection device for a power steering system in the end positions of the steering range, whereby the power steering system exhibits at least one working piston (2) capable of displacement in a steering housing (1) in the axial direction and delimiting two working areas (I, II), disconnection valves (7, 17) allocated to the working piston (2), and contact means (13, 23) allocated to the steering housing (1) and displaceable in the axial direction, against which in each case one of the disconnection valves (7, 17) runs in the end position and thereby opens in order to disconnect the pressure, **characterised in that** the contact means (13, 23) are fixed in non-positive fit by means of a spring (14, 24) taking effect in the radial direction, with a retaining force which exceeds the opening force of the disconnection valves (7, 17).

2. Device according to Claim 1, **characterised in that** the contact means (13,23) exhibit an essentially round shaft area and that the spring (14, 24) surrounds the shaft area in the form of a ring.

3. Device according to Claim 1 or 2, **characterised in that** the spring (14, 24) is a circumferential strip spring with a corrugated profile (30) in the circumferential direction.

4. Device according to one of the foregoing claims, **characterised in that** the contact means (13, 23) are guided in each case in a hole (11, 21), exhibit a removable seal (15, 26) which is fluid-tight and pressure-tight, after the removal of which an end of the contact means (13, 23) in each case, turned away from the working piston (2) of the steering housing (1) is accessible.

5. Device according to one of the foregoing claims, **characterised in that** the hole (21) is a passage aperture of the steering housing (1).

6. Device according to one of the foregoing claims, **characterised in that** the hole (11) is a blind hole or a passage aperture in a retaining element (10) to be secured separately in the steering housing (1), for preference in a hollow screw.

7. Device according to one of the foregoing claims, **characterised in that** the spring (14, 24) is inserted in an annular groove allocated to the hole (11, 21) or the shaft area, and is fixed in the axial direction.

## Revendications

1. Dispositif d'interruption de pression pour une direction assistée dans les positions d'extrémité du débattement de braquage, dans lequel la direction assistée comporte au moins un piston de travail (2), qui est déplaçable dans une direction longitudinale dans un boîtier de direction (1) et délimite deux chambres de travail (I, II), et comportant des soupapes d'interruption (7, 17), qui sont associées au piston de travail (2), ainsi qu'un moyen de butée (13, 23), qui est associé au boîtier de direction (1), est déplaçable dans la direction longitudinale et contre lesquels respectivement l'une des soupapes d'interruption (7, 17) vient dans la position d'extrémité et s'ouvre pour l'interruption de la pression, **caractérisé en ce que** le moyen de butée (13, 23) est fixé selon une liaison de force à l'aide d'une force de retenue qui dépasse la force d'ouverture des soupapes d'interruption (7, 17), à l'aide d'un ressort (14,24) qui agit dans une direction radiale.

2. Dispositif selon la revendication 1, **caractérisé en ce que** le moyen de butée (13, 23) comporte une partie en forme de tige essentiellement circulaire et que le ressort (14, 24) entoure selon une forme annulaire la partie de la tige.

3. Dispositif selon la revendication 1 ou 2, **caractérisé en ce que** le ressort (14, 24) est un ressort en forme de bande périphérique comportant un profil (30) de forme ondulée dans la direction circonférentielle.

4. Dispositif selon l'une des revendications précédentes, **caractérisé en ce que** le moyen de butée (13, 23) est guidé respectivement dans un perçage (11, 21), de préférence chaque perçage (11, 21) possédant un dispositif supérieur de fermeture (15, 26) pouvant être retiré et étanche aux fluides et à la pression et après le retrait duquel une extrémité du moyen de butée respectif (13, 23) tournée à l'opposé du piston de travail (2) du boîtier de direction (1) est accessible.

5. Dispositif selon l'une des revendications précédentes, **caractérisé en ce que** le perçage (21) est un perçage traversant du boîtier de direction (1).

6. Dispositif selon l'une des revendications précédentes, **caractérisé en ce que** le perçage (11) est un perçage borgne ou un perçage traversant aménagé dans un élément de retenue (10) qui doit être fixé séparément dans le boîtier de direction (1), de préférence une vis creuse.

7. Dispositif selon l'une des revendications précédentes, **caractérisé en ce que** le ressort (14,24) est disposé dans une gorge annulaire associée au perçage (11, 21) ou à la partie de la tige, et est fixé dans la direction axiale.
